# EUROPEAN PATENT APPLICATION

(11) **EP 2 544 391 A1**
(43) Date of publication of application: **09.01.2013**
(21) Application number: 11750539.6
(22) Date of filing: 24.02.2011
(51) Int. Cl.: H04J 11/00, H04B 7/005

(54) **CHANNEL ESTIMATION CIRCUIT, CHANNEL ESTIMATION METHOD, AND RECEIVER**

(30) Priority: 05.03.2010 JP 2010048938
(71) Applicant: NEC Corporation, Tokyo 108-8001 (JP); NTT DoCoMo, Inc., Tokyo 100-6150 (JP)
(72) Inventor: YOKOTE, Toshimichi, Tokyo 108-8001 (JP)
(74) Representative: Vossius & Partner
(86) International application number: PCT/JP2011/054090
(87) International publication number: WO 2011/108429

(57) **Abstract**

Disclosed is a channel estimation circuit that efficaciously removes a noise component in a time region and implements high precision channel estimation in channel estimation of a wireless communications system employing OFDM. The channel estimation circuit comprises estimation means (31, 32) for deriving estimated channel state information for each subcarrier from a received signal of each subcarrier that is obtained by converting OFDM-transmitted signal waves into frequency regions, using known and established reference signals that are multiplexed and transmitted together with data symbols; a first conversion means (33) for converting the estimated channel state information into a complex latency profile of a time region; a noise alleviation means (34) for alleviating noise by processing the complex latency profile: a second conversion means (35) for converting the complex latency profile processed by the noise alleviation means and obtaining estimated channel state information whereupon the noise is alleviated; and determination means (36, 37) for determining the status of the channel that has been estimated in the estimation means (31, 32). The noise alleviation means (34) mask processes a portion of the complex latency profile according to the state of the channel as determined by the determination means (36, 37).

## Description

### {Technical Field}

The present invention relates to a channel estimation circuit, a channel estimation method, and a receiver for Orthogonal Frequency Division Multiplexing (OFDM) communication method.

### {Background Art}

In recent years, communication technologies have been developing remarkably, and a system for communicating a great amount of data at a high speed is now on its way of materialization. These aspects are seen not only in cable communication but also in wireless communication. Namely: in association with mobile terminals, such as a cellular phone and the like, becoming increasingly popular, next-generation communication methods are now actively being studied and under development, those next-generation communication methods enabling communication of a great amount, of data at a high speed even by way of wireless communication, and also enabling mobile terminals as well to use multimedia data, such as videos, sounds, and so on.

As a next-generation communication method, attracting attention is a communication method making use of OFDM being represented by Long Term Evolution (LTE) that is discussed in 3rd Generation Partnership Project (3GPP). OFDM is a method in which a band to be used is divided into a plurality of sub-carriers, and each data symbol is assigned to each of the sub-carriers for transmission. The sub-carriers are so arranged as to be orthogonal to each other on a frequency axis, and therefore they are superb in frequency usage efficiency. Furthermore, each sub-carrier has a narrow bandwidth, enabling suppression of an effect of multi-path interference. Consequently, it becomes possible to materialize high-speed broadband communication.

On the other hand, in wireless communication, a signal distortion is caused in a wireless communication path (channel) due to multi-path fading and the like. Therefore, it is needed to evaluate an estimated result on channel characteristics of each sub-carrier (estimated channel state information) by making use of known reference signals, multiplexed and transmitted together with data symbols, in order to compensate the signal distortion that the channel has suffered at a receiver. If an accuracy of estimated channel state information is low, the signal distortion is not appropriately compensated, and therefore a demodulation accuracy of a received signal becomes reduced. Under such circumstance, various techniques are proposed in order to improve an accuracy of estimated channel state information.

PTL1 and NPL1 disclose a channel estimation technique, in which estimated channel state information of each sub-carrier estimated according to the reference signals is processed through an Inverse Fast Fourier Transform (IFFT) to create a delay profile, and then a component smaller than a predetermined threshold is considered as a noise so as to be replaced with "0" in order to suppress an effect of the noise in a time domain. Thus, it is known that estimated channel state information with a high level of accuracy can be obtained by using such a channel estimation technique.

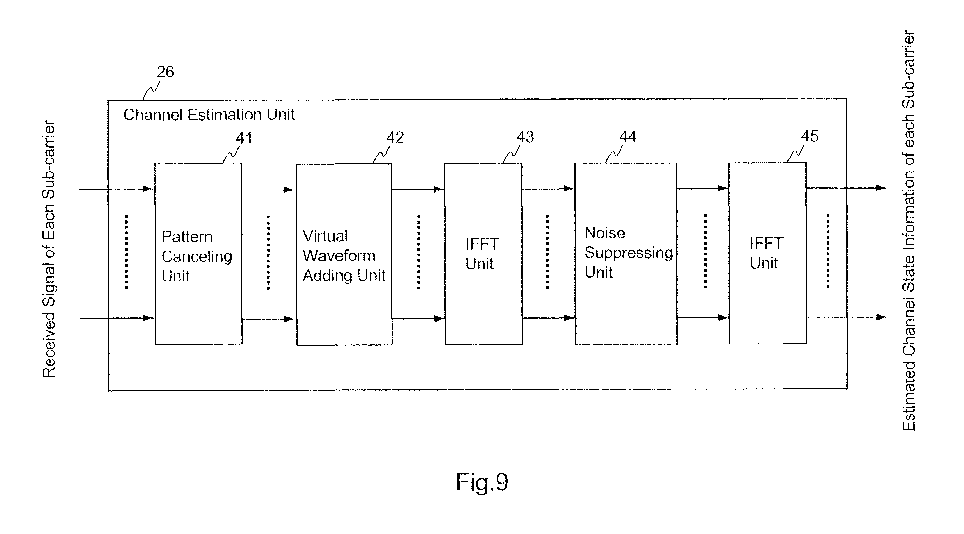

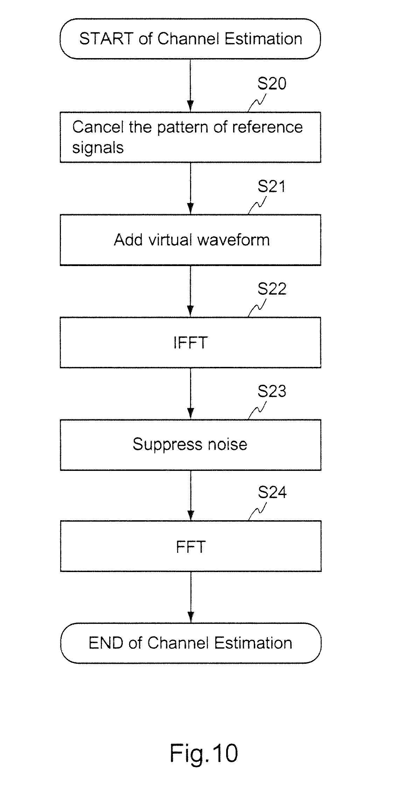

The channel estimation technique disclosed in PTL1 and NPL1 is explained next, with reference to FIG. 9 and FIG. 10. FIG. 9 is a block diagram showing an example of a conventional configuration of a channel estimation circuit for estimating the channel state of each sub-carrier according to a received signal on that sub-carrier. FIG. 10 is a flowchart showing a process workflow of the channel estimation circuit shown in FIG. 9.

The channel estimation circuit of a conventional configuration example shown in FIG. 9 includes a pattern canceling unit 41, a virtual waveform adding unit 42, an IFFT unit 43, a noise suppressing unit 44, and an FFT unit 45.

The pattern canceling unit 41 cancels a pattern of reference signals, multiplexed and transmitted together with data symbols, in order to estimate the channel state of each sub-carrier (Step S20 in FIG. 10). The virtual waveform adding unit 42 adds a waveform to the estimated channel state information estimated according to the reference signals in such a way that the number of samples becomes a power of two (Step S21 in FIG. 10). The IFFT unit 43 transforms the estimated channel state information to which the waveform has been added, from a frequency component into a time-domain complex delay profile (Step S22 in FIG. 10). The noise suppressing unit 44 calculates a power delay profile according to the complex delay profile. Then, a sample with the power delay profile being less than a predetermined threshold is considered as a noise, and a corresponding sample of the complex delay profile is replaced with "0" (Step S23 in FIG. 10). Subsequently, the FFT unit 45 transforms again the complex delay profile after the noise suppressing process into a frequency component to obtain the estimated channel state information with the noise suppressed (Step S24 in FIG. 10).

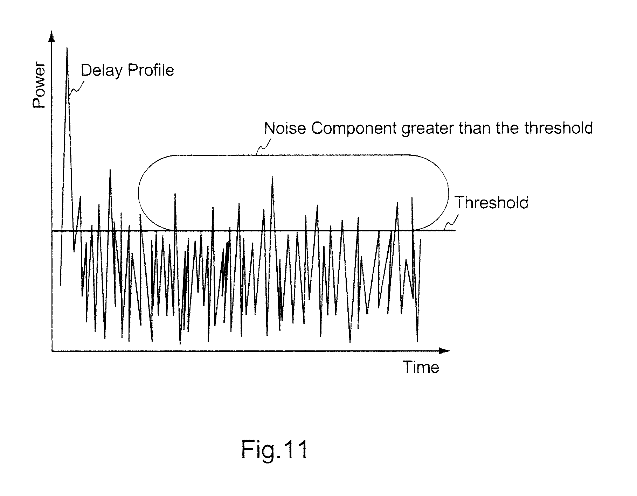

Under the condition that a component smaller than a predetermined threshold is considered as a noise; if there exists a noise component greater than the threshold as shown in FIG. 11, eventually the noise component cannot be removed. Unfortunately, in such a case, channel estimation accuracy becomes low. The lower a Signal-to-Noise Ratio (SNR) is, the more significantly such an unfavorable incident is likely to happen.

On the other hand, PTL2 discloses a channel estimation technique in which masking is executed by multiplying a rectangular wave on a time axis. This technique enables removal of a noise component having a long delay time, and therefore even a great noise component can be removed.

Unfortunately, multiplication of a rectangular wave on a time axis causes a signal distortion at an end of a waveform after noise removal. In the case of a low SNR, an advantage of noise removal is more significant than an effect of the signal distortion at an end of a waveform. As a result, channel estimation accuracy becomes improved. Meanwhile, in the case of a high SNR, unfortunately the effect of the signal distortion at an end of a waveform cannot be ignored, and therefore the channel estimation accuracy contrarily becomes deteriorated.

### [Citation List.]

### [Patent Literature]

PTL1: JP 2008-HJ7088 A
PTL2: JP 2007-142603 A

### {Non Patent Literature}

NPL1: Takashi DATEKI, Daisuke OGAWA, and Hideto FURUKAWA "OFDM Channel Estimation by Adding a Virtual Channel Frequency Response". Institute of Electronics, Information and Communication Engineers - General Conference. B-5-94, 2006

### {Summary of Invention}

### {Technical Problem}

Thus, it is an object of the present invention to provide a channel estimation circuit, a channel estimation method, and a receiver, which enable effectively removing a noise component in a time domain, for materializing channel estimation with a high level of accuracy, in the channel estimation of a wireless communication system by means of OFDM.

### {Solution to Problem}

According to a first aspect of the present invention, provided is a channel estimation circuit, including: an estimation means for estimating a channel state of each sub-carrier to obtain estimated channel state information, according to a received signal of the sub-carrier obtained by way of transforming a signal-wave transmitted through OFDM into a frequency domain, by using known reference signals multiplexed and transmitted together with a data symbol; a first transforming means for transforming the estimated channel state information into a time-domain complex delay profile; a noise suppressing means for suppressing a noise by way of processing the complex delay profile; a second transforming means for obtaining estimated channel state information with its noise suppressed, by way of transforming the complex delay profile, processed by the noise suppressing means, into a frequency domain; and a judging means for making a judgment on a channel state estimated at the estimation, means; wherein, the noise suppressing means carries out masking on a part of the complex delay profile in accordance with the channel state on which the judging means makes a judgment.

According to a second aspect of the present invention, provided is a channel estimation method, including the steps of estimating a channel state of each sub-carrier to obtain estimated channel state information, according to a received signal of the sub-carrier obtained by way of transforming a signal-wave transmitted through Orthogonal Frequency Division Multiplexing into a frequency domain, by using known reference signals multiplexed and transmitted together with a data symbol; transforming the estimated channel state information into a time-domain complex delay profile; suppressing a noise by way of processing the complex delay profile; and outputting estimated channel state information with its noise suppressed, by way of transforming the complex delay profile, in which the noise has been suppressed, into a frequency domain; wherein, a judgment is made on a channel state at the time of evaluating the estimated channel state information of each sub-carrier; and at the time of suppressing the noise, masking is carried out on a part of the complex delay profile in accordance with the channel state on which the judgment has been made.

According to a third aspect of the present invention, provided is a receiver, including: a processing unit for transforming a signal-wave transmitted through Orthogonal Frequency Division Multiplexing into a frequency domain; a channel estimation unit for estimating a channel state of each sub-carrier to obtain estimated channel state information, according to a received signal of the sub-carrier obtained by using the processing unit; a channel equalizing unit for channel-equalizing by means of multiplying the received signal of each sub-carrier and a conjugation of the estimated channel state information together; and a demodulation unit for demodulating the received signal of each sub-carrier channel-equalized by the channel equalizing unit; and further comprising, the channel estimation circuit according to the first, aspect, as the channel estimation unit.

### {Advantageous Effect of Invention}

According to the present invention, it is possible in channel estimation of a wireless communication system using OFDM to effectively remove a noise component in a time domain and to materialize the channel estimation with a high level of accuracy.

### Brief Description of the Drawings

Fig. 1 is a block diagram of a transmitter of a wireless communication system using OFDM, according to an embodiment, of the present invention.
Fig. 2 is a block diagram of a receiver of the wireless communication system using OFDM, according to the embodiment of the present invention.
FIG. 3 is a block diagram of a channel estimation circuit to be used as a channel estimation unit in the receiver shown in FIG. 2.
FIG. 4 is a flowchart showing a process workflow of the channel estimation unit shown in FIG. 3.
FIG. 5 is a drawing for explaining an effect of masking on a complex delay profile.
FIG. 6 is a drawing for explaining a relationship between a time-domain delay profile and a frequency-domain estimated channel state information.
FIG. 7 is a drawing for explaining another embodiment of masking.
FIG. 8 is a drawing for explaining still another embodiment of masking.
FIG. 9 is a block diagram showing an example of a conventional configuration of a channel estimation circuit for evaluating estimated channel state information of each sub-carrier according to a received signal of the sub-carrier.
FIG. 10 is a flowchart showing a process workflow of the channel estimation circuit shown in FIG. 9.
FIG. 11 is a drawing that shows an example of a complex delay profile in which a noise component greater than a threshold exists.

### {Description of Embodiments}

An embodiment of the present invention is explained below with reference to the accompanied drawings, wherein used as an example is channel estimation in Long Term Evolution (LTE) of 3rd Generation Partnership Project (3GPP).

### (Configuration)

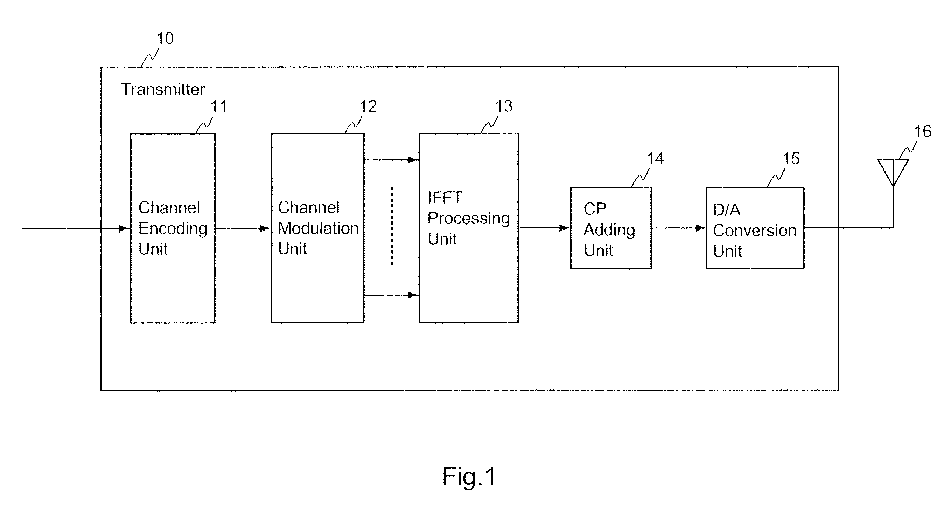

FIG. 1 is a block diagram of a transmitter of a wireless communication system using OFDM, according to the embodiment of the present invention. A transmitter 10 includes a channel encoding unit 11, a channel modulation unit 12, an IFFT unit 13, a cyclic prefix (CP) adding unit 14, a digital/analog (D/A) conversion unit 15, and a transmission antenna 16.

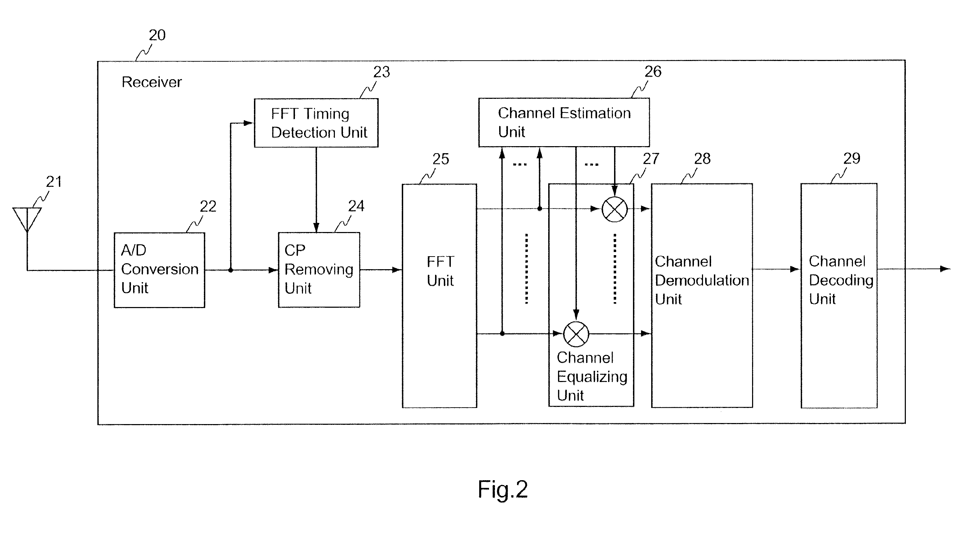

FIG. 2 is a block diagram of a receiver of the wireless communication system using OFDM, according to the embodiment of the present invention, and the block diagram shows a configuration of the receiver of LTE. A receiver 20 includes a receiving antenna 21, an analog/digital (A/D) conversion unit 22, a Fast Fourier Transform (FFT) timing detection unit 23, a CP removing unit 24, an FFT unit 25, a channel estimation unit 26, a channel equalizing unit 27, a channel demodulation unit 28, and a channel decoding unit 29.

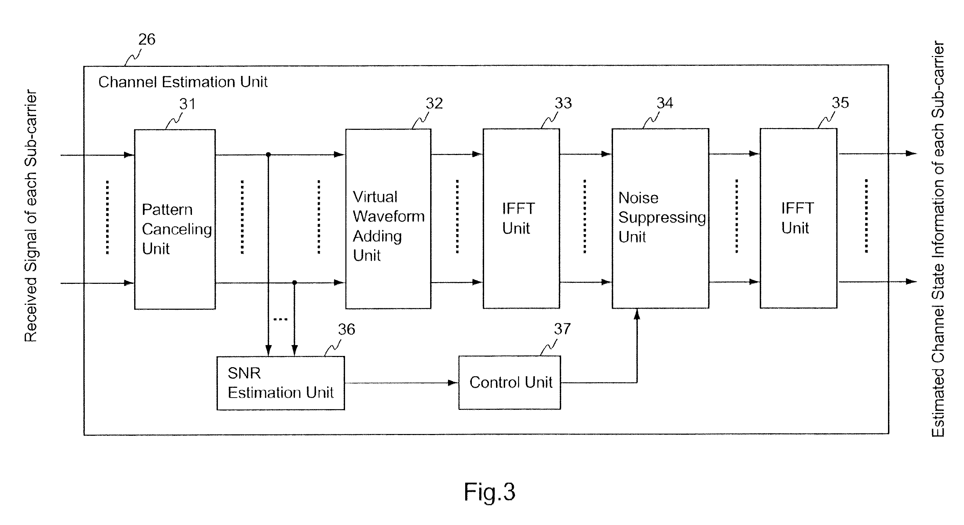

FIG. 3 is a block diagram of a channel estimation circuit to be used as the channel estimation unit 26 shown in FIG. 2. The channel estimation unit 26 includes a pattern canceling unit 31, a virtual waveform adding unit 32, an IFFT unit 33, a noise suppressing unit 34, an FFT unit 35, an SNR estimation unit 36, and a control unit. 37.

### (Explanation of operation)

Operation of the transmitter 10 shown in FIG. 1 is explained at first. Transmit data to be sent to each user is entered in transmitter 10. The channel encoding unit 11 executes error detection and error correction coding for the transmit data. The data channel modulation unit 12 maps the transmit data, for which the error detection and error correction coding has already been executed, to the I-component and Q-component. The IFFT unit 13 transforms the transmit data, mapped to the I-component and Q-component, into a time-domain signal-wave. The CP adding unit 14 adds a CP to a top of OFDM symbols in order to avoid an effect of inter symbol interference due to multi-path. The D/A conversion unit 15 converts the OFDM symbols to which the CP has been added, from a digital signal to an analog signal. Then, the OFDM symbols converted into the analog signal are transmitted from the transmission antenna 16.

Operation of the receiver 20 is explained next. In the receiver 20, a received signal which the receiving antenna 21 has received, enters the A/D conversion unit 22. The A/D conversion unit 22 converts the received signal from an analog signal to a digital signal, and outputs the digital signal to the FFT timing detection unit 23 and the CP removing unit 24. The FFT timing detection unit 23 detects FFT timing information out of the received signal converted into the digital signal. The CP removing unit 24 removes the CP from the OFDM symbols, added to the top of these, on the basis of the detected FFT timing information. The FFT unit 25 transforms the time-domain signal-wave, from which the CP has already been removed, into each sub-carrier component.

The channel estimation unit 26 estimates the channel state of each sub-carrier to obtain estimated channel state information, based on the received signal of the sub-carrier obtained by the FFT unit 25, making use of known reference signals multiplexed and transmitted together with data symbols. The channel equalizing unit 27 compensates (channel-equalizing) a signal distortion that the channel has suffered, by means of multiplying the received signal of each sub-carrier and a conjugation of the estimated channel state information evaluated by the channel estimation unit 26 together. The channel demodulation unit 28 converts the received signal of each sub-carrier, for which an effect of the channel has already been compensated, to likelihood information, according to the 1-component and Q-component. The channel decoding unit 29 executes error correction and error detection decoding for the likelihood information obtained by the channel demodulation unit 28, in order to obtain received data.

The pattern canceling unit 31 and the virtual waveform adding unit 32 of the channel estimation unit 26 operate as a estimation means for estimating a channel state of each sub-carrier to obtain estimated channel state information, according to the received signal of the sub-carrier obtained by way of transforming the signal-wave transmitted through OFDM into a frequency domain, by using known reference signals multiplexed and transmitted together with data symbols. The IFFT unit 33 operates as a first transforming means for transforming the estimated channel state information into a time-domain complex delay profile. The noise suppressing unit 34 operates as a noise suppressing means for suppressing a noise by way of processing the complex delay profile. The FFT unit 35 operates as a second transforming means for obtaining estimated channel state information with its noise suppressed, by way of transforming the complex delay profile, processed by the noise suppressing unit 34, into a frequency domain. The SNR estimation unit 36 and the control unit 37 operate as a judging means for making a judgment on a channel state estimated at the pattern canceling unit 31 and the virtual waveform adding unit 32.

### (Channel estimation)

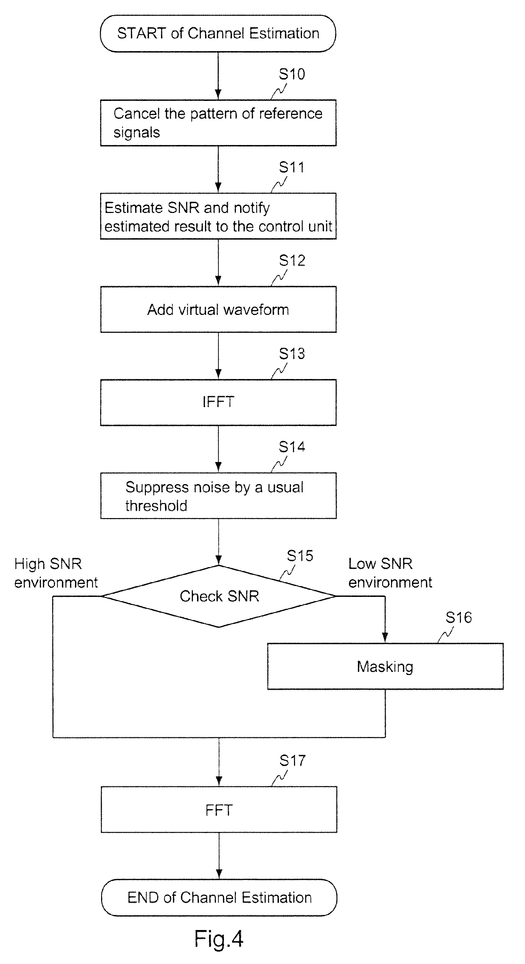

FIG. 4 is a flowchart showing a process workflow of the channel estimation unit 26 shown in FIG. 3. Operation of channel estimation is explained below with reference to FIG. 3 and FI. 4.

The pattern cancelling unit 31 cancels a pattern of the reference signals multiplexed and transmitted together with the data symbols, in order to estimate the channel state of each sub-carrier (Step S10 in FIG. 4). The estimated channel state information derived from the reference signals enters the SNR estimation unit 36 and the virtual waveform adding unit 32. The SNR estimation unit 36 estimates an SNR of a channel, and notifies the control unit 37 of an estimated result (Step S11 in FIG. 4). The virtual waveform adding unit 32 adds a waveform in such a way that the number of samples becomes a power of two (Step S12 in FIG. 4).

The estimated channel state information, to which the waveform has been added, enters the IFFT unit 33. Then, the IFFT unit 33 transforms the estimated channel state information, according to its frequency component, into a time-domain complex delay profile (Step S13 in FIG. 4).

The noise suppressing unit 34 calculates a power delay profile according to the complex delay profile. Then, a sample with the power delay profile being less than a predetermined threshold is considered as a noise, and a corresponding sample of the complex delay profile is replaced with "0" (Step S14 in FIG. 4). In the meantime, the control unit 37 makes a judgment on whether the case of a low SNR or that of a high SNR is given (Step S15 in FIG. 4), while referring to the estimated SNR value notified by the SNR estimation unit 36. In the case of a high SNR the noise suppressing unit 34 carries out no additional process. Meanwhile, in the case of a low SNR. the noise suppressing unit 34 carries out masking (to be described later in detail) for replacing a part of the complex delay profile with "0" (Step S16 in FIG. 4).

The FFT unit 35 transforms again the complex delay profile, after noise suppression, into a frequency component in order to obtain estimated channel state information with its noise suppressed (Step S17 in FIG. 4).

### (Explanation of advantageous effect)

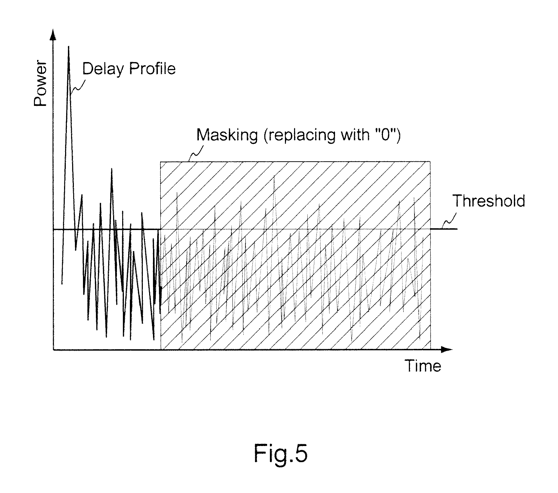

FIG. 5 is a drawing for explaining an effect of masking on a complex delay profile. Masking for the complex delay profile is carried out with respect to a noise component having a long delay time in the power delay profile. Thus, a noise component, which could not be removed by a noise suppression processing using a threshold, can be now removed by masking (shaded part).

In the embodiment described above, masking is carried out in accordance with a channel state. A reason for masking to be carried out in such a way is that execution of masking under a high SNR environment deteriorates the accuracy of estimated channel state information at an end of the bandwidth. A background for the situation described above is explained below.

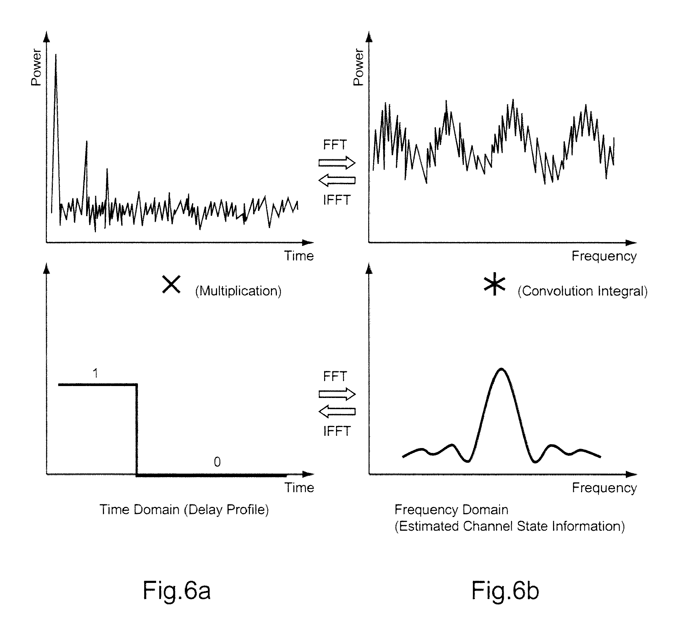

FIG. 6 is a drawing for explaining a relationship between a time-domain delay profile and frequency-domain estimated channel state information. For making a simple explanation in this context, used for the explanation is not a complex delay profile but a power delay profile.

As masking for replacing a part of a delay profile with "0", multiplication of the delay profile by a rectangular waveform is carried out in this example, as shown in FIG. 6A. From a viewpoint of a frequency domain, namely a viewpoint of estimated channel state information, this process means a convolution of original estimated channel state information and a sine function as a frequency-wise waveform of a rectangular wave, as shown in FIG. 6B. When the convolution of original estimated channel state information and a sinc function being executed, noise influence is removed by an effect of smoothing, but meanwhile a signal distortion happens at an end of a bandwidth.

In the case of a low SNR, the effect of removing noise by way of smoothing is more significant than the effect of the signal distortion at an end of a bandwidth. As a result, an accuracy of the channel estimation is improved. On the other hand, in the case of a high SNR, the effect of the signal distortion at an end of a bandwidth cannot be ignored so that the accuracy of the channel estimation is reduced. Due to the reason described above, masking that takes the channel state into consideration makes it possible to obtain estimated channel state information, with a high level of accuracy.

### (Other embodiments)

Although, in the embodiment, described above, noise suppression using an usual threshold and masking are carried out together, it is not necessarily needed to carry out both together. The noise suppressing unit 34 may have a configuration for only carrying out masking.

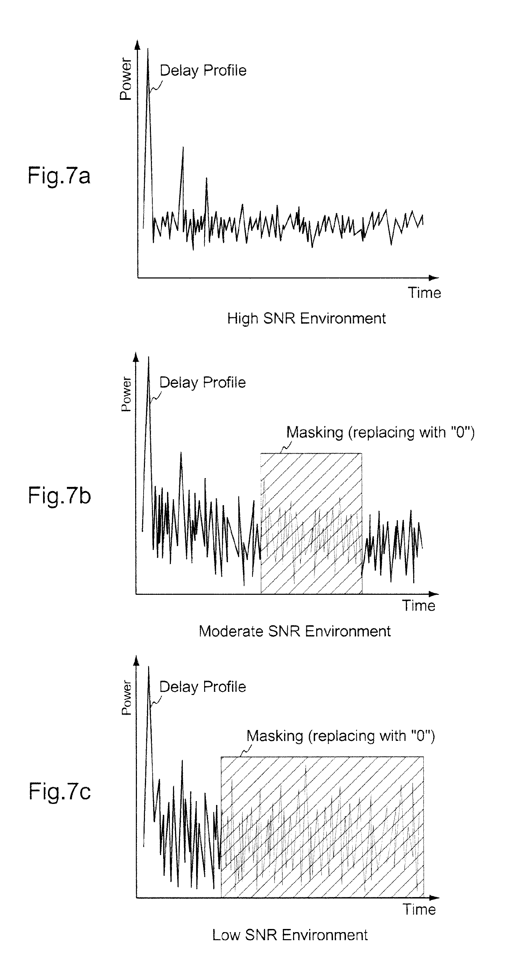

FIG. 7 is a drawing for explaining another embodiment, of masking. In the above embodiment, explained as an example is a configuration in which two cases including one case of a low SNR and the other case of a high SNR are supposed in accordance with the estimated SNR value, wherein masking is carried out in the case of a low SNR environment, and not carried out in the case of a high SNR environment. Nevertheless, the present invention is not necessarily limited to the configuration. As shown in FIG. 7, applied may be a configuration in which a masking range varies in accordance with the SNR value: namely the lower the SNR is, the wider the masking range becomes; and in other words, the higher the SNR is, the narrower the masking range is. In an example shown in FIG. 7, no masking is carried out in the case of a high SNR environment, as shown in FIG. 7A; masking with a moderate masking range is carried out in the case of a moderate SNR environment, as shown in FIG. 7B; and masking with a relatively wide masking range is carried out in the case of a low SNR environment, as shown in FIG. 7C.

FIG. 7 shows an example in which three levels on the masking range are prepared. Alternatively, more levels on the masking range may be prepared finely. Still alternatively, applied may be another configuration in which the masking range varies smoothly in accordance with the variation of SNR.

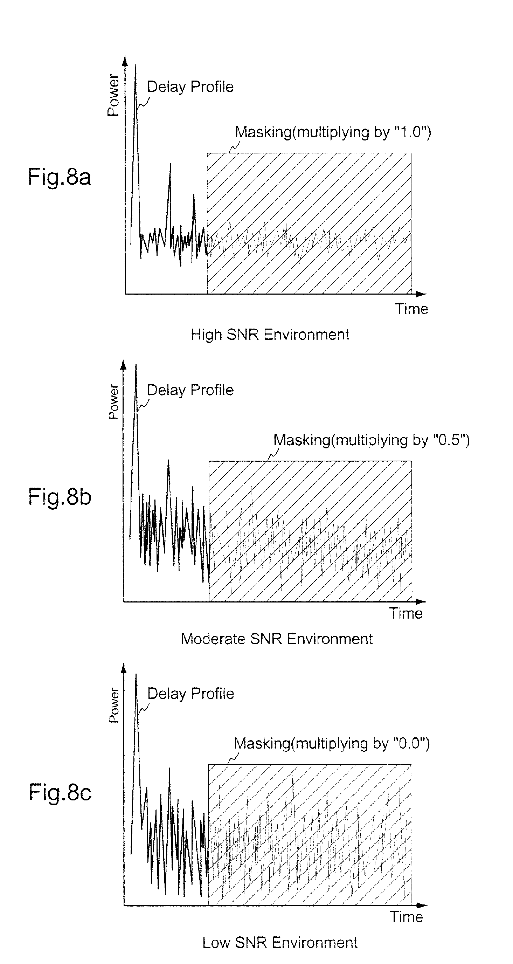

FIG. 8 is a drawing for explaining still another embodiment of masking. In the above explanation, described is an example of masking in which a corresponding part of the delay profile is multiplied by "0." In the case of the above explanation, carrying out no masking can be understood as carrying out masking by multiplying the delay profile by "1." In the meantime, applied may be a configuration in which, instead of multiplying by "0" or "1" simply, the coefficient value changes in accordance with the variation of SNR; namely, the lower SNR is, the smaller the coefficient value becomes; and in other words, the higher SNR is, the larger the coefficient value is. In an example shown in FIG. 8, the delay profile (For making a simple explanation, a power delay profile is shown) is multiplied by a coefficient "1.0" in the case of a high SNR, as shown in FIG. 8A; the delay profile is multiplied by a coefficient "0.5" in the case of a moderate SNR, as shown in FIG. 8B; and the delay profile is multiplied by a coefficient "0.0" in the case of a low SNR, as shown in FIG. 8C.

Fig. 8 shows the example in which three levels on the coefficient, by which the delay profile is multiplied, are prepared. Alternatively, more levels on the coefficient may be prepared finely. Still alternatively, applied may be another configuration in which the coefficient varies smoothly in accordance with the variation of SNR.

Furthermore, applied may be also a configuration in which one configuration including the variable masking range as shown in FIG. 7 is combined with the other configuration including the variable coefficient, by which the delay profile is multiplied, as shown in FIG. 8.

Although, a configuration as an example, in which whether or not to carry out masking is determined by making use of the estimated SNR value, is explained in the embodiment described above, the present invention is not necessarily limited to the embodiment. When masking is carried out under the condition of a high SNR, an accuracy of channel estimation at an end of a bandwidth is reduced, and meanwhile the channel estimation at a middle part of the bandwidth is not affected so much. Therefore, whether or not to carry out masking can also be determined according to scheduling information on what part of the bandwidth the data for a user is mapped, instead of using SNR. Specifically to described, applied may be a configuration in which masking is carried out if the data for a user is mapped only at the middle part of the bandwidth, and meanwhile masking is not carried out if the data is placed at the end of the bandwidth.

Furthermore, even in the case where masking is carried out on the basis of the scheduling information, as described above, applied may be the configuration in which one configuration including the variable masking range is combined with the other configuration including the variable coefficient, by which the delay profile is multiplied. Moreover, applied may be still another configuration in which masking is controlled by using both the scheduling information and SNR.

Although, LTE studied in 3GPP is explained as an example in the above explanation, the present embodiment is not necessarily limited to the explanation. The present invention can be implemented in a similar manner, even in a system according to another type of OFDM transmission method, as well as in any other wireless communication system.

The present invention can be widely applied to cellular phones, data communication cards, Personal Handy-phone System (PHS), Personal Data Assistance or Personal Digital Assistants (PDA), receivers of a communication system, such as a wireless base station, and the like.

### {Reference Signs List}

- 10.: Transmitter
- 11.: Channel encoding unit
- 12.: Channel modulation unit
- 13.: IFFT unit
- 14.: CP adding unit
- 15.: D/A conversion unit
- 16.: Transmission antenna
- 20.: Receiver
- 21.: Receiving antenna
- 22.: A/D conversion unit
- 23.: FFT timing detection unit
- 24.: CP removing unit
- 25.: FFT unit
- 26.: Channel estimation unit
- 27.: Channel equalizing unit
- 28.: Channel demodulation unit
- 29.: Channel decoding unit
- 31, 41.: Pattern canceling unit (Part of an estimation means)
- 32, 42.: Virtual waveform adding unit (Part of an estimation means)
- 33, 43.: IFFT unit (First transforming means)
- 34, 44.: Noise suppressing unit (Noise suppressing means)
- 35, 45.: FFT unit (Second transforming means)
- 36.: SNR estimation unit (Part of judging means)
- 37.: Control unit (Part of judging means)

## Claims

1. A channel estimation circuit, comprising
an estimation means for estimating a channel state of each sub-carrier to obtain estimated channel state information, according to a received signal of the sub-carrier obtained by way of transforming a signal-wave transmitted through Orthogonal Frequency Division Multiplexing into a frequency domain, by using known reference signals multiplexed and transmitted together with data symbols;
a first transforming means for transforming the estimated channel state information into a time-domain complex delay profile;
a noise suppressing means for suppressing a noise by way of processing the complex delay profile;
a second transforming means for obtaining estimated channel state information with its noise suppressed, by way of transforming the complex delay profile, processed by the noise suppressing means, into a frequency domain; and
a judging means for making a judgment on a channel state estimated at the estimation means;
wherein, the noise suppressing means carries out masking on a part of the complex delay profile in accordance with the channel state on which the judging means makes a judgment.

2. The channel estimation circuit according to claim 1:
wherein, the judging means makes a judgment on the channel state, by making use of a Signal-to-Noise Ratio as a criterion.

3. The channel estimation circuit according to claim 2:
wherein, the noise suppressing means carries out masking in the case where the Signal-to-Noise Ratio is lower than a predetermined value.

4. The channel estimation circuit according to any one of claim 1 to claim 3.
wherein, the judging means makes a judgment on the channel state, by making use of scheduling information, on what part of a bandwidth data is mapped, as a criterion.

5. The channel estimation circuit according to claim 4:
wherein, the noise suppressing means carries out masking when the data is scheduled only at a middle part of the bandwidth.

6. The channel estimation circuit according to any one of claim 1 to claim 5:
wherein, the noise suppressing means makes a range of masking vary in accordance with the channel state on which the judging means makes a judgment.

7. The channel estimation circuit according to claim 6:
wherein, the lower the Signal-to-Noise Ratio is, the wider the masking range becomes.

8. The channel estimation circuit according to any one of claim 1 to claim 7:
wherein, the noise suppressing means carries out making, while the coefficient value, by which the complex delay profile is multiplied, being adjusted in accordance with the channel state on which the judging means makes a judgment.

9. The channel estimation circuit according to claim 8:
wherein, the lower the Signal-to-Noise Ratio is than a predetermined value, the smaller the noise suppressing means makes the coefficient value.

10. A channel estimation method, comprising the steps of:
estimating a channel state of each sub-carrier to obtain estimated channel state information, according to a received signal of the sub-carrier obtained by way of transforming a signal-wave transmitted through Orthogonal Frequency Division Multiplexing into a frequency domain, by using known reference signals multiplexed and transmitted together with a data symbol;
transforming the estimated channel state information into a time-domain complex delay profile;
suppressing a noise by way of processing the complex delay profile; and
outputting estimated channel state information with its noise suppressed, by way of transforming the complex delay profile, in which the noise has been suppressed, into a frequency domain;
wherein, a judgment is made on a channel state at the time of evaluating the estimated channel state information of each sub-carrier; and
at the time of suppressing the noise, masking is carried out on a part of the complex delay profile in accordance with the channel state on which the judgment has been made.

11. A receiver, comprising:
a processing unit for transforming a signal-wave transmitted through Orthogonal Frequency Division Multiplexing into a frequency domain;
a channel estimation unit for estimating a channel state of each sub-carrier to obtain estimated channel state information, according to a received signal of the sub-carrier obtained by using the processing unit;
a channel equalizing unit for channel-equalizing by means of multiplying the received signal of each sub-carrier and a conjugation of the estimated channel state information together; and
a demodulation unit for demodulating the received signal of each sub-carrier channel-equalized by the channel equalizing unit; and
further comprising, the channel estimation circuit according to claim 1, as the channel estimation unit.
